# EUROPEAN PATENT APPLICATION

(11) **EP 4 550 645 A1**
(43) Date of publication of application: **07.05.2025**
(21) Application number: 23829315.3
(22) Date of filing: 13.07.2023
(51) Int. Cl.: H02M 1/08, H02M 1/12, G06F 13/12, H02J 3/01, H02M 7/42, H02M 7/487, H02M 7/49, H02M 7/5395

(54) **METHODS FOR CURRENT CONTROL TOGETHER WITH SELECTIVE HARMONIC ELIMINATION MODULATION IN A THREE-PHASE DC-AC CONVERTER CONNECTED TO THE POWER GRID TO MITIGATE CURRENT DISTORTION BY LOW ORDER HARMONICS AND DIGITAL FILTERING OF HARMONICS**

(30) Priority: 29.06.2022 BR 102022013022
(71) Applicant: Companhia Energética de Pernambuco - CELPE, 50050-902 Recife / PE (BR); Universidade Federal de Minas Gerais, 31270-901 Belo Horizonte, MG (BR)
(72) Inventor: DE SOUZA BRITO, José Antonio, 41181-900 Salvador / BA (BR); DE JESUS CARDOSO FILHO, Braz, 31255-720 Belo Horizonte / MG (BR); MORAIS PARREIRAS, Thiago, 32043-045 Contagem / MG (BR)
(74) Representative: Cabinet Beau de Loménie
(86) International application number: PCT/BR2023/050222
(87) International publication number: WO 2024/000054

(57) **Abstract**

The invention relates to the implementation of closed-loop current control for three-phase electronic power converters connected to the power grid, based on selective harmonic elimination pulse-width modulation (SHE-PWM) with measured currents having a high content of low-order harmonic distortion, using a method for implementing current control together with selective harmonic elimination modulation for a three-phase DC-AC converter connected to the power grid in the presence of a current that is highly distorted with lower order harmonics.

## Description

The present invention relates to a method for implementing current control in conjunction with selective harmonic elimination modulation for a three-phase DC-AC (Direct Current - Alternating Current) converter connected to the power grid. More specifically, the method of the present invention relates to the implementation of closed-loop current control of three-phase power electronic converters connected to the power grid that are based on selective harmonic elimination modulation (SHE PWM) from measured currents with high low-order harmonic distortion content.

In general, the technical advantages of the present invention are obtained with the technology applied in sets with the unity power factor converter in all its possible applications, such as, but not limited to:
- interface between wind power generator and the electrical grid;
- interface between photovoltaic generation plant and the electrical grid;
- interface between large-scale energy storage systems (such as batteries and supercapacitors) and the electrical grid;
- interface between high-power electrical drives and the electrical grid. Especially in cases where these drives require regenerative braking.

The digital harmonic filtering system can be applied in any location where it is necessary to filter, in real time or not, low-order harmonics without attenuating the fundamental component.

### STATE OF THE ART

The selective harmonic elimination technique has great benefits for high-power applications connected to the power grid, namely: prior knowledge of the harmonic's characteristic of the waveform, low losses due to the low switching frequency, and higher-order harmonics (easier to filter) than in conventional modulation techniques.

For active and reactive power flow control, the coordinated current control technique is a strong candidate, but its application in conjunction with selective harmonic elimination in industrial controllers is non-trivial. Among the main challenges are:
(1) Storing the switching angles of the selective harmonic elimination (in look-up tables) and updating them at a rate fast enough for current control (amplitude control - modulation index);
(2) Ensuring the synchronization of the fundamental component of the switched waveform with the power grid and with the phase shift required for current control (angle control).

The 2009 document "FPGA based selective harmonic elimination pulse width modulation technique" reveals that the SHE PWM modulator is implemented in an FPGA through neural networks trained to obtain the desired pulse pattern at the output due to a certain modulation index. The main objective is to reduce the size of the look-up tables. The results are presented for a single-phase system with 6 switching angles (controlling the fundamental and eliminating 3rd, 5th, 7th, 9th and 11th harmonics). The solution presented in the state of the art does not include phase control of the fundamental and does not mention closed-loop control. [06] The 2011 paper "Flash FPGA-based numerical pulse-width modulator" reveals the implementation of the SHE PWM modulator in FPGA, where the logical XOR operation is performed between the waveform obtained by the SHE PWM method and a variable duty cycle signal to obtain, as a response, the final waveform. The objective is to reduce the size of the lookup table, but without losing the resolution of the fundamental output waveform. Results are presented for the control of the fundamental and the reduction of Y and 7th order harmonics. The cost of such a solution is the appearance of harmonics in the voltage that would otherwise be uncharacteristic. It also does not present the method of phase control of the fundamental nor does it mention closed-loop control.

A solution for controlling three-phase converters connected to the power grid in closed loop using 15-pulse SHE PWM modulation (fundamental control and elimination of harmonics 5th, 7th, 1st, 13th, 17th, 19th, 23th, 25th, 29th, 31st, 35th, 37th, 41st, 43rd) is presented in the document "Closed loop selective harmonic elimination applied to a grid connected PWM converter with LCL filter" from 2011, where the SHE PWM modulator is implemented in FPGA and the rest of the control in a digital signal processor (DSP - Digital Signal Processor). The fundamental phase control is performed through a third proportional-integral (PI) controller that works from the error between the reference angle (output of the current control on a synchronous rotary shaft) and the actual measured angle. This solution has the following disadvantages: (1) apparent variation of the fundamental frequency synthesized by the modulator around the frequency of the electrical grid; (2) Switching frequency relatively close to the value already used in high-power converters (15 pulses in the waveform imply a switching frequency of 1860 Hz for 2-level converters); (3) Method used to track the grid angle (conversion of three-phase measurements on a stationary axis) is sensitive to distortions and voltage unbalance; (4) The dynamics of the system will be compromised, since the authors used the output signal of a proportional-integral angle controller as the frequency, which is mathematically incorrect (the frequency is the derivative of the angle). Finally, the proposed solution also employs the use of an inductor-capacitor-inductor (LCL) filter in connection to the electrical grid, which does not make the best use of the fact that the characteristic harmonics in the SHE PWM strategy are strictly defined.

The 2013 paper "Method for realizing selective harmonic elimination modulation by adopting fixed control cycle" reveals an application of current control combined with selective harmonic elimination modulation for three-level voltage source converters. Grid voltage angle tracking and closed-loop current control on a rotating shaft is performed in a conventional controller. The reference voltage and angle (current control outputs) and frequency (angle derivative) are sent to an FPGA, processing at 40 MHz. Since the cyclic frequency of the conventional controller is only 625 Hz, the FPGA itself performs the integration of the frequency signal to obtain the grid angle with better resolution. A system that compares the current value of the reference angle with the previous value in relation to pre-established references, decides when the value of the angle of the output synthesized wave should be updated or not, so as to make the SHE PWM work with an approximately constant angle for the greatest number of cycles possible and to prevent the switching pattern from changing in the same cycle. The strategy used to track the network angle is not presented, nor is the form of communication between the DSP and FPGA. No details are presented about the SHE PWM implementation used: the number of pulses and harmonics eliminated are examples of important information omitted. The use of all the amplitude, angle and frequency information from slow control in DSP makes such control more susceptible to variations in the electrical network. The solution is based on the implementation of 3-level converters connected to the electrical network through an LCL filter, not making good use of the SHE PWM.

R. Ekstrom and M. Leijon, in the document "FPGA control implementation of a grid-connected current-controlled voltage-source inverter" from 2013, suggest an application of closed-loop current control in a three-phase converter connected to the power grid that is fully implemented in FPGA. However, the grid angle tracking system used is still susceptible to the presence of a distorted and balanced grid. The PWM modulation technique used (sinusoidal PWM) is very simple and of little practical use in three-phase systems (reduced use of the DC bus voltage).

In turn, the document "Phase-locked loop based on selective harmonics elimination for utility applications", by N. R. N. Ama, F. O. Martinz, L. Matakas, and F. Kassab, 2013, suggests a new grid angle tracking system, based on a PLL where the voltage-controlled oscillator (VCO) is designed for a voltage signal modulated by the selective harmonic elimination technique (instead of being sinusoidal) with the intention of simplifying the implementation of PLLs in FPGAs and DSPs, while mitigating the steady-state error when the voltage contains harmonics. It is not presented in any context of application with closed-loop control. Selective harmonic elimination is not used as a PWM technique.

The document "Harmonic analysis and FPGA implementation of SHE controlled three phase CHB 11 -level inverter in MV drives using deterministic and stochastic optimization techniques" from 2013 reveals the implementation of SHE PWM in FPGA with real-time calculation of angles through the particle swarm optimization technique aiming at its application in cascaded H-bridge converters. The results are presented in open loop and without load. The document is silent regarding grid synchronization and closed-loop current control.

The document "A real-time and closed-loop control algorithm for cascaded multilevel inverter based on artificial neural network", by L. Wang, C. Mao, D. Wang, J. Lu, J. Zhang, and X. Chen, 2014 reveals neural networks trained for real-time implementation of the SHE PWM modulator for cascaded H-bridge converters. The objective is to reduce the computational cost of the application. A closed-loop voltage control is implemented to adjust the modulation index as a function of the actual output voltage. The document is silent on closed-loop current control and the grid-connected application.

The document "FPGA-based implementation of online selective harmonic elimination PWM for voltage source inverter" by D. Bendib, C. Larbes, A. Guellal, M. Khider, and F. Akel, 2017, reveals the FPGA implementation of a SHE PWM strategy with a variable number of pulses with frequency in order to enable a scalar control strategy (constant Volts/Hertz) in the drive of electric motors. The angle curves calculated offline by traditional methods are approximated by polynomial interpolation in equations whose coefficients vary according to the number of pulses. Results are presented in open loop. There is no mention of the case of a grid-connected converter with closed-loop current control.

According to K. Imarazene, Y. S. Ali Khodja, C. Rouabhia, E. M. Berkouk, and H. Chekireb in the 2017 paper "FPGA-hased control of three-level inverter using Selective Harmonics Elimination PWM", 4-pulse SHE PWM (controlling the fundamental and eliminating 5th, 7th, and 1st harmonics) for three-level inverters is implemented in FPGA. Only open-loop results are presented and there is no mention of closed-loop current control of grid-connected inverters.

The document "Current Control of Grid Tied Inverter through SHEPWM Method" by S. D. Patil, S. G. Kadwane, and S. P. Gawande, 2017, implements the closed-loop current control strategy using SHE PWM in a single-phase 7-level converter (composed of cascaded H-bridge). Details of the grid angle tracking (PLL) and current control are not presented. The application is greatly facilitated by the use of intermediate DC-DC converters that allow choosing and keeping the modulation index fixed (only one set of angles), which greatly limits the application, since intermediate conversion stages are required between the converter and the load/DC source. Another limitation is that the authors present a single-phase application and apply the SHE PWM strategy ignoring third-order harmonics (especially the third).

The document "Digital implementation of SHE-PWM modulation on FPGA for a multilevel inverter" by M. D. de C. Alves and M. D. De Carvalho Alves, R. N. A. Leao, and S. Aquino, 2018, reveals the FPGA implementation of selective harmonic elimination for a three-phase three-level converter combining, per phase, a half-bridge (HB) converter and an active neutral point clamped converter (ANPC). The results presented are directed to only one modulation index and there is no mention of grid-connected current control.

The paper "Harmonics minimization in 3-level inverter waveform and its FPGA realization" by S. Ahmad, Z. A. Ganie, I. Ashraf, and A. Iqbal, 2018 reveals that selective harmonic elimination is implemented in FPGA for 3-level converters for number of pulses equal to 3, 5, 7, 9 and 13. There is no closed-loop control or synchronization with the power grid.

A third challenge of great relevance in applications such as the true unity power factor (TUPF) converter, initially proposed by B. de J. C. Filho and T. M. Parreiras in the document "Method and equipment for eliminating harmonic components and obtaining a unitary power factor in alternating current - direct current and direct current - alternating current converters" from 2014, is the need to extract in real time the fundamental component of the current that circulates in the converters, which is highly distorted by low-order harmonics (most notably, 5th and T harmonics), which must be filtered in real time so as not to deteriorate the converter's operation. Filtering in real time of signals in the control feedback loop, requires attenuation of low-order harmonics without impacting the amplitude of the fundamental (which makes the transition band between the passband and the forbidden band very short), in addition to minimum signal delay. In this case, the prediction of harmonics present in the current was initially proposed, a method with high computational cost (the SHE PWM modulators are duplicated) and extremely dependent on the estimated parameters of the plant (open loop method).

As the work progressed, it was proposed to measure the currents in the primary of the transformer inherent to TUPF technology, which are already practically sinusoidal. However, this solution, in addition to requiring measurements of currents for control in the primary of the transformer, which may be far from the point of installation of the converter and be high voltage, is only applicable where it is reasonable to assume an equal division of the currents in each secondary. This limits the application to cases where the direct current buses that make up each of the converters of this technology are connected in parallel. Busbars not connected to each other or in series require the need to control the injection of different active powers between secondaries, thus requiring the use of highly distorted currents present in them.

The document "Performance evaluation of digital filters used for distance relaying" by S. A. Soliman, G. S. Christensen, and S. Fouda from 1991 reveals Butterworth-type Infinity Impulse Response (IIR) digital filters of different orders (4th, 8th, and 10th order), used in the post-fault processing of voltage and current signals from distance relays to attenuate fifth-order and higher harmonics, which are compared in terms of accuracy in locating the fault and the delay time for this location. Higher-order filters present better accuracy at the cost of taking longer to achieve the correct result. However, it is not a solution with real-time current control concerns.

A method for capturing the positive, negative, and zero sequence of the fundamental and harmonics of a three-phase voltage is presented in the prior art, which uses voltage angle tracking through the use of a 2nd-order PLL and a least-squares algorithm. The fundamental component is detected in approximately two cycles of the waveform. This method is not applicable to the detection of fundamentals in currents, since they are not necessarily in phase with the voltage, and the solution involving PLL cannot be applied to current circulation.

In the document "Design of a digital HR filter for active filtering applications" from 2012 presented by A. Hemdani, M. W. Naouar, I. S. Belkhodja, and Anouar. Monmasson, the development of a digital filter based on HR Butterworth of 6th order for application in active filter of shunt type harmonics is revealed. The need to remove low order harmonics (5th and 7th, most notably) without affecting the low order harmonics was facilitated by filtering the signal on a rotating axis with the fundamental frequency of the network (the d and q components of the current appear on the rotating axis as continuous components). The narrow transition band of the filter (100 Hz) was responsible for the choice of the filter order. Although it achieved the application objectives, the delay of approximately two cycles in obtaining the correct value of the fundamental would not be sufficient for the dynamic control of an active rectifier. The strategy for obtaining the angle for the rotating axis (simply obtaining the angle of the axis of stationary coordinates alpha and beta) is also sensitive to strong distortions or voltage imbalance in the network.

The use of IIR digital filters is the common method for separating the fundamental component from harmonic components (including low order) in active shunt filters, as shown in J. Reinhart, "Controlling Harmonic Distortion in Power Electronics using Active Power Filters", 2013. However, because the harmonic problem is mostly treated in steady state, there is no concern about the delay caused by this type of solution.

The document "Filtering and processing of harmonic signals using averaging technique in digital relays" by N. K. Javinani, H. A. Abyaneh, and K. Mazlumi, 2013 proposes the use of a moving average filter with a properly adjusted calculation period to replace 1st or 2nd order low-pass IIR filters in the processing of current and voltage signals in digital protection relays. There was no concern whatsoever with the signal phase shift caused by these approaches, since the purpose was not control.

The document "A Method for Extracting the Fundamental-Frequency Positive-Sequence Voltage Vector Based on Simple Mathematical Transformations", by H. E. P. de Souza, F. Bradaschia, F. A. S. Neves, M. C. Cavalcanti, G. M. S. Azevedo, and J. P. de Arruda, 2009, reveals a scheme for tracking the angle of the fundamental positive-sequence component of the grid voltage using a series of transformations derived from symmetric component theory, a 20th-order Finite Impulse Response (FIR) filter, and a rotating-axis PLL. Although the method is effective in dynamically tracking the angle of the voltage vector in three-phase systems, the delays presented in the reconstruction of AC signals are a potential problem for application as a filter in currents used as feedback for closed-loop control.

The 2014 document "Voltage fundamental component detection method for overcoming frequency perturbation" reveals a scheme for extracting the fundamental component of voltage in a network with frequency disturbances based on a moving window Fourier transform. The method is capable of correctly tracking frequency and phase in a system with frequency disturbance and the presence of harmonics. The computational effort is reasonable (large set of equations and need for real-time DFT) and its application in current signals for closed-loop control feedback is uncertain.

In turn, the document "Evaluation of Fundamental d-q Synchronous Reference Frame harmonic Detection Method for Single Phase Shunt Active Power Filter", by S. Gautam, P. Yunqing, Y. Kafle, M. Kashif, and S. U. Hasan, 2014, reveals that the application of a moving average filter is the choice for obtaining the fundamental component in a single-phase shunt-type active harmonic filter, with advantages over 3rd-order Butterworth low-pass filters or 2nd-order cascaded filters with a band-stop filter (notch filter). Similar to what was said with reference to what was proposed in "Design of a digital HR filter for active filtering applications" from 2012 presented by A. Hemdani, M. W. Naouar, I. S. Belkhodja, and Anouar. Monmasson, in this case the delays are more acceptable since the current being filtered is not in the feedback path, but rather in the generation of the reference for the filter.

Hybrid Filter", by R. Sriranjani and S. Jayalalith, 2014, reveals a least squares algorithm that is used for the filtering required for a three-phase hybrid shunt filter. In addition to the above (the fact that delays in this current, which is not the controlled variable, are acceptable in this application), the passive filter of the proposed hybrid system was dimensioned for the lowest order and most predominant harmonic in the system (5th harmonic), which greatly facilitated the operation of the proposed system, but there is the disadvantage of the high cost of power hardware.

In turn, the document "A Review of Design Digital Filter for Harmonics Reduction in Power System", by P. Nagare, S. Pable, and A. K. Kureshi, 2016, reveals HR and FIR digital filters that are compared with a view to their application in electrical systems in the presence of harmonics. While FIR filters are always stable and have special characteristics such as linear phase, they are much more computational demanding (higher order filters are necessary for an accurate result and also greater data storage). The same authors used these filters in other works, but few details were provided and the applications requiring real-time filtering were not addressed.

The document "A Fast-Convergent Modulation Integral Observer for Online Detection of the Fundamental and Harmonics in Grid-Connected Power Electronics Systems", by B. Chen, G. Pin, W. M. Ng, T. Parisini, and S.-Y. R. Hui, 2017, reveals that the integral modulation function observer technique is proposed to extract the fundamental and harmonic components of distorted currents in active shunt filter applications. The proposal is compared with other techniques: Recursive Discrete Fourier Transform, method based on the theory of instantaneous powers, and adaptive notch filter method. The convergence time of all methods, in the range of 10 ms (best cases) or higher, is still detrimental if applied to the current control feedback of active rectifiers.

Unlike the state of the art, the technical effect achieved by the present invention is the implementation not only of the modulator, but also of the angle tracking system (PLL) in the FPGA itself, which represents a substantial improvement in the dynamic behavior of the system, since the network variations are directly perceived by the PLL + SHE PWM system in a faster processing FPGA.

The application of the technology proposed here in combination with a truly unity power factor converter eliminates the need to measure currents in the transformer primary for control purposes, which could be very complex due to the possibility of the transformer being installed in a different location and its primary being in High Voltage (HV).

### BRIEF DESCRIPTION OF THE DRAWINGS

Figure 1 shows the technology of the present application applied to the control (1) of the True Unity Power Factor (TUPF) converter.
Figure 2 shows the typical current (2) between converters and secondaries in TUPF technology, the waveform (a) and the harmonic spectrum (b).
Figure 3 shows a block diagram of virtual transformer filtering.
Figure 4 shows the waveform of the measured current superimposed on the filtered value during a positive step of the current reference (a) and during a negative step of the current reference (b).
Figure 5 shows a block diagram and the transfer function of a virtual transformer filtering (9) for the case of single-phase signals. Frequency response graphs are also presented.
Figure 6 shows an assembly method for laboratory testing of the technology of the present application, which includes the prototype of the TUPF converter (3), oscilloscope (4), DdOyl transformer (5), programming computer (6), energy analyzer (7).

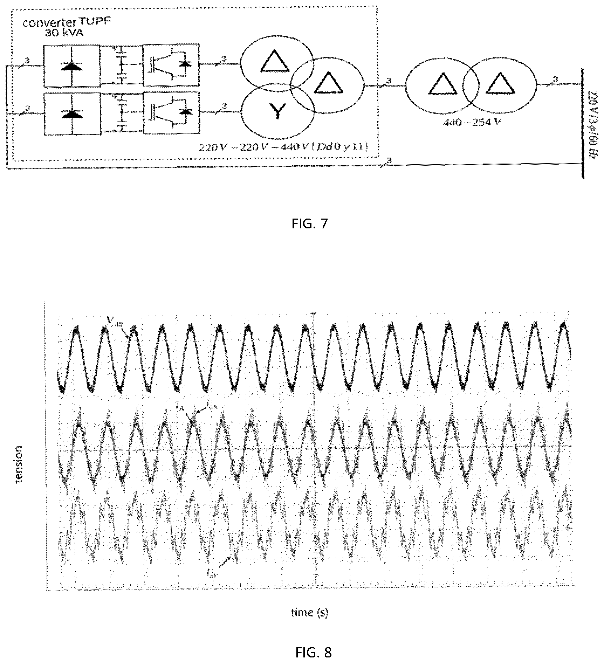

Figure 7 shows the power diagram of the laboratory test with the technology of the present application in which the reference signal (8) represents the three-phase 3-wire connection.
Figure 8 shows the line voltage between phases A and B together with the currents of phase A circulating in both converters (highly distorted) and the resulting current in the electrical network (practically sinusoidal).

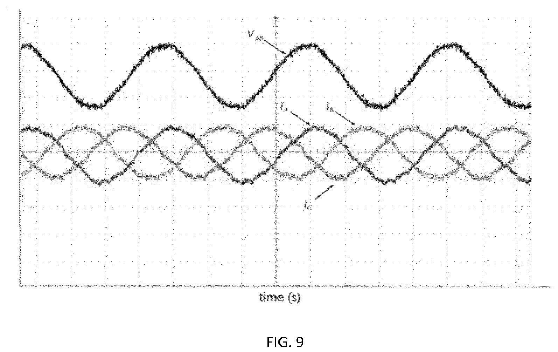

Figure 9 shows the line voltage between phases A and B together with the currents in the three phases of the network.

### DETAILED DESCRIPTION OF THE INVENTION

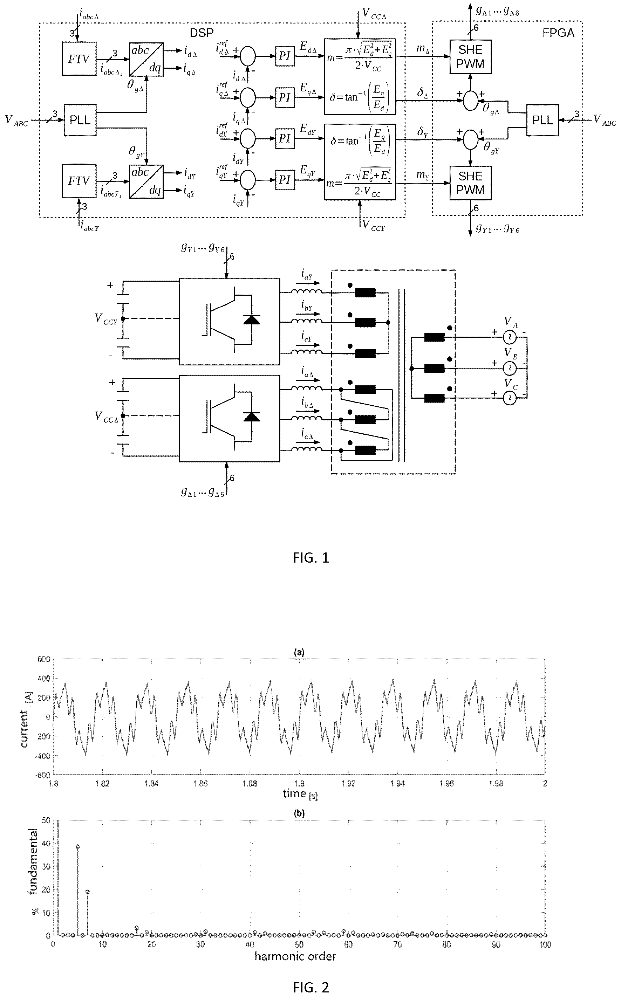

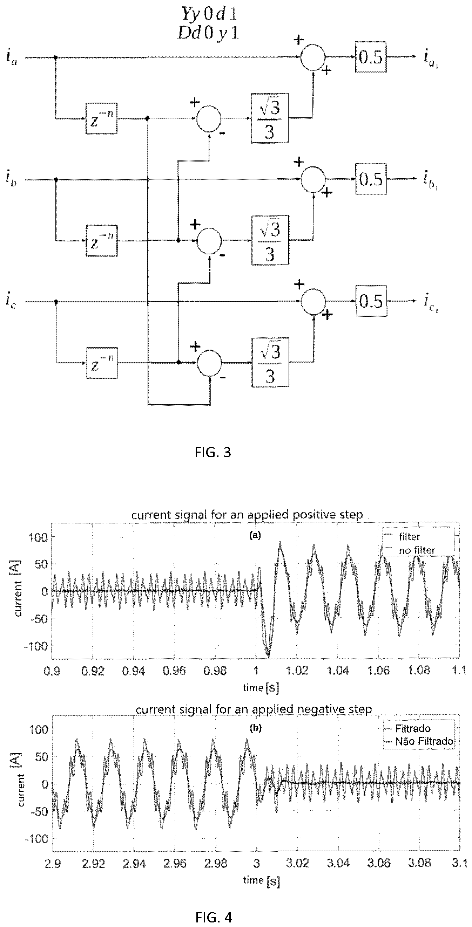

The method described herein is shown in Figure 1 in the context of application in a true unity power factor converter, but it can be used in any grid-connected converter application where it is desired to use closed-loop current control combined with selective harmonic elimination modulation, which is generally of greater interest in high-power converters. The method consists of the following steps:
Step 1: The currents measured between transformer secondaries and converters, whose typical waveform and harmonic spectrum are shown in Figure 2, have a high low-order harmonic content (especially 5th and 7th). The fundamental components of these currents need to be extracted in real time before continuing their feedback path in the controller, which is done by a method hereinafter called Virtual Transformer Filtering (VTF), schematically presented in Figure 3, which consists of emulating, through appropriate equations, the behavior of a multi-winding transformer with a convenient phase shift.

In the specific example in Figure 3, a transformer with a star primary and star (no phase shift) and delta (30° phase shift) secondaries is emulated (YyOdl). Each measured current is treated as passing through the star secondary; a version of this same current delayed in the controller by a number of samples equivalent to 30° of the fundamental (for example, 8 samples for a 5.76 kHz processing in the processor and a fundamental frequency in the network of 60 Hz) is treated as passing through the delta secondary. The resulting currents in the primary are inherently filtered for harmonics of the order 6k+1, where k is an odd integer. The gain at the end of Figure 3 is for adjusting the amplitude of the resultant. As indicated in Figure 3, this model also represents a transformer with a primary and one of the secondaries in a delta (without phase shift) and another secondary in a star with a phase shift of 30° (DdOyl).

The result of this process is presented in Figure 4 for the current of one of the phases. The original waveform of the current is presented together with the filtered waveform, where one can verify the steady-state and, in particular, dynamic behavior of the proposed technique, which allows its use for real-time filtering of three-phase currents highly distorted by low-order harmonics.

An expansion of this concept of filtering by virtual transformer can be made to encompass cases of single-phase signals, as indicated in Figure AA, where the block diagram of the single-phase filter and its transfer function are presented. In this case, the signal that would originally come from another phase in the secondary, 30° out of phase, is replaced by an appropriate delay of the single input signal. The transfer function of this filter shows unity gain at a frequency of 60 Hz (absence of attenuation and null phase), in addition to the strong attenuation of harmonics of order 6 k ± 1 for all integer and odd k.

It is important to emphasize that this method is not limited to the case presented here (emulation of YyOdl or DdOyl transformers), three-winding transformers in any other configuration urements that produce a 30° phase shift between the two secondaries, with one of them in phase with the primary, will produce the same effect, simply by readjusting the equations according to the connection chosen to be emulated.

This method can be expanded to emulate transformers with more than three windings, in which case, in addition to the correct equation according to the transformer connection, it is sufficient to correctly offset the measured current for the other virtual secondaries of this methodology. In this way, it is possible to filter an even greater number of low-order harmonics.

Step 2: The currents filtered by the method described in step 1, which already occurs within a controller with a processing frequency of the order of a few kHz (e.g., a TMS320F28335 with a sampling frequency of 5.76 kHz), feed the closed-loop current control in this same controller. This control is developed on a rotary coordinate axis synchronous to the grid voltage vector angle, using the decoupled dual-axis synchronous reference PLL as the angle tracking mechanism, which is capable of tracking the angle of the fundamental positive sequence component of the grid voltage even in situations of a highly unbalanced grid and/or with distorted voltages (presence of harmonics).

Closed-loop control for both converters is included in the same controller, which is facilitated by the fact that the SHE PWM is implemented in specific hardware (see Step 3), which reduces the processing required by the DSP. The active current reference (direct axis current) is given by a DC bus voltage control that can vary according to the type of connection between the DC inputs of the converters (series, parallel or individual). The reactive current reference (quadrature axis) is free for the user according to whether or not reactive support (ancillary services) is required.

The output of the current controllers, direct and quadrature axis voltages, are properly converted to the modulation index and angle between the grid voltage vector and the reference voltage vector for the converter. These signals are sent to the FPGA (Step 3) through an appropriate communication protocol (serial or parallel).

Step 3: The modulation index and the reference angle of the voltage vector of the synchronous axis converter are received in the second controller that makes up the proposed technology (an FPGA). This controller implements the look-up tables for the modulation by selective elimination of harmonics of the two converters and the second PLL, of the same type as that mentioned in step 2, which makes this technology known as dual PLL. In this way, both the SHE PWM lookup tables and the grid angle signal (which also defines the frequency) can be processed at a substantially higher rate (e.g., 250 kHz), which is essential for the correct dynamic and steady-state operation of the closed-loop current control connected to the power grid with SHE PWM.

The outputs of this FPGA (GPIOs) are used to send pulses to the trigger devices of the semiconductor switches of the converters (after the correct adjustment of the voltage/current levels of the signals, according to the needs of each specific application).

### EXAMPLE

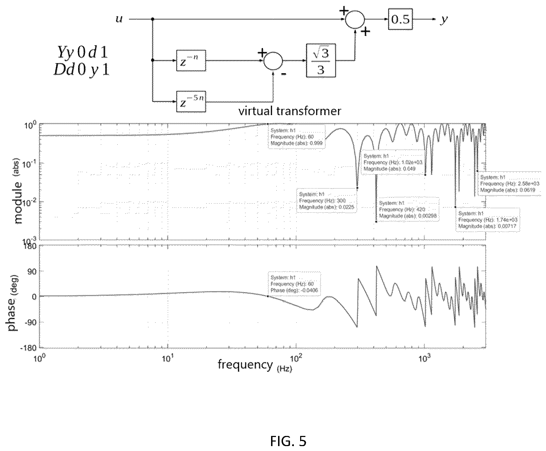

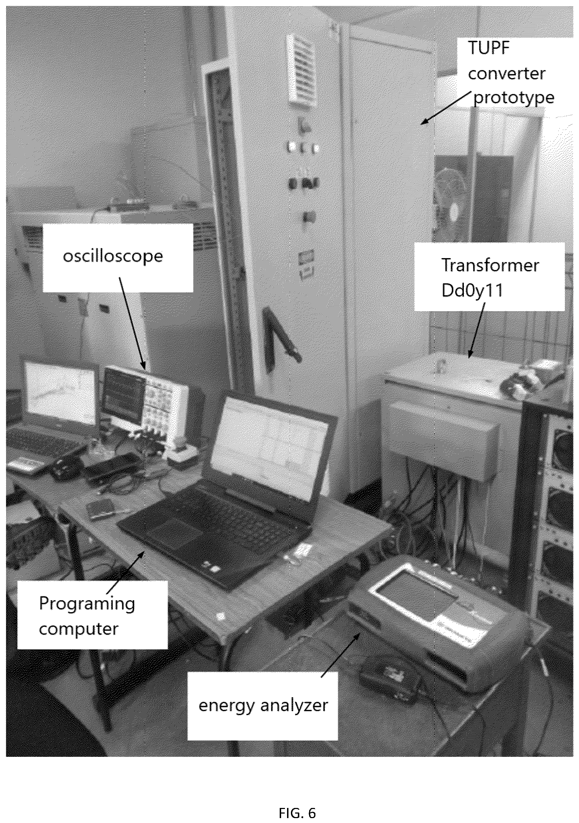

A small-scale prototype (30 kVA / 440 V) of the technology presented in the state of the art was assembled, as shown in Figure 5, where the proposed technology was implemented to control its operation. The converter was connected to the laboratory grid, as shown in Figure 6, in order to allow full current to flow through the converter while the grid is responsible for supplying only the circuit losses.

The invention allows the satisfactory implementation of closed-loop current control of three-phase power electronic converters connected to the electrical grid that are based on selective harmonic elimination modulation (SHE PWM, from the English Selective Harmonic Elimination Pulse Width Modulation) from measured currents with a high content of low-order harmonic distortion.

The digital harmonic filtering system that is part of the proposed technology can be applied anywhere where it is necessary to filter, in real time or not, low-order harmonics (most notably the fifth and seventh) without attenuating the fundamental component. This is the case, for example, of active power filters such as the shunt type, where it is necessary to obtain the fundamental waveform of the current in the nonlinear load so that, by subtracting this from the total current, the harmonic current reference to be injected by the filter can be obtained.

The system performs control in two different controllers, a microcontroller at low processing frequency and an FPGA at high processing frequency. The closed-loop control is implemented in the microcontroller and the SHE PWM in the FPGA. There is a system for tracking the angle of the grid voltage vector in each of the controllers, which improves the dynamic behavior of the system and reduces the amount of information to be exchanged between controllers.

The extraction of the fundamental component of the distorted current is performed by emulating the harmonic cancellation present in three-phase multi-winding transformers, which allows the attenuation of low-order harmonics without appreciable distortions of module and phase in the fundamental component, thus allowing the use of the resulting signal in the current control feedback loop.

The technology of the present invention uses a Dual PLL system, where the grid angle tracking system is implemented both in the current control system (implemented in DSP at a processing frequency of the order of a few kHz, e.g. 6 kHz) and in the PLL + SHE PWM system (implemented in FPGA with a processing frequency of the order of hundreds of kHz, e.g. 250 kHz), which eliminates the need for communication of the grid angle/frequency between the two systems existing in the state of the art.

The strategy used for angle tracking, in both controllers that make up the proposed structure, is based on tracking the angle of the fundamental component of the positive sequence (where the power transfer is effectively performed) which, unlike the state of the art, which uses only the transform angle for stationary axes, is suitable for real systems where distortions and imbalances can be found in the grid. Furthermore, the choice of a dual decoupled synchronous reference system for the PLL makes the system even more robust to distorted and unbalanced networks than the solutions presented in the state of the art. The proposed technique for digital filtering of the current signal is capable of capturing the fundamental, eliminating the characteristic low-order harmonics (such as 5th and 7th) without distorting the fundamental's phase (signal delays) as caused by high-order digital filters or other techniques found in the state of the art, which makes it possible to use this fundamental signal in the feedback path of closed-loop current control.

The proposed digital filtering technique does not require transformations and their inverses on synchronous coordinate axes, nor does it use Fourier transforms or other complex mathematical transformations, which greatly simplifies implementation and reduces computational costs.

The application of the technology proposed here in combination with the truly unity power factor converter proposed in the state of the art allows the use of the two conversion stages that make up that structure with their direct current power interfaces, connected in series, parallel or even individually, unlike solutions adopted previously, where only the parallel connection could be applied.

The application of the technology proposed here in combination with the true unity power factor converter allows a greater passband in the adjustment of the current controller, since such controller must be adjusted at a frequency sufficiently lower (e.g., 10 times) than the first harmonics eliminated by the SHE PWM modulator and, in other technologies currently proposed, these are of 11th and 13th order, while in conventional approaches, these are of 5th and 7th order for three-phase system and of third order for single-phase system.

Some features of the present invention have been presented; however, the invention is not limited by the examples shown here. It should be understood that omissions, substitutions, changes in the form and details of the system and method can be made by a person skilled in the art, without departing from the spirit and scope of the invention.

## Claims

1. Current (2) control (1) method in conjunction with selective harmonic elimination modulation in a three-phase DC-AC converter connected to the power grid to mitigate current distortion by low-order harmonics, the method comprising the steps of:
- real-time extraction of the fundamental components of the currents (2) measured between the transformer (5) secondaries and converters (3);
- performing feedback in the controller;
- powering the closed-loop current (2) control (1);
- receiving, in the second controller, the modulation index and the reference angle of the voltage vector of the synchronous-axis converter;
- modulating, by selective harmonic elimination;
- processing the SHE PWM lookup tables and the grid angle signal.

2. Method, according to claim 1, **characterized in that** the currents (2) measured between the transformer (5) secondaries and converter (3) have a high low-order harmonic content.

3. Method, according to claim 1, **characterized in that** the real-time extraction is performed by a Virtual Transformer Filtering (VTF) method.

4. Method according to claim 3, **characterized in that** the extraction consists of simulating the behavior of a multi-winding transformer (5) with a convenient phase shift.

5. Digital harmonic filtering method (9), the method comprising the following steps:
- performing control in two different controllers;
- performing control in a microcontroller at a low processing frequency; and
- performing control in an FPGA at a high processing frequency;
in which the extraction of the fundamental component of the distorted current is performed by simulating the harmonic cancellation present in three-phase multi-winding transformers, attenuating the low-order harmonics without appreciable distortions of module and phase in the fundamental component, thus allowing the use of the resulting signal in the current control feedback loop.

6. Method according to claim 5, wherein the closed-loop control is implemented in the microcontroller and the SHE PWM is implemented in the FPGA.

7. Method according to claim 5, wherein each controller has a system for tracking the angle of the grid voltage vector.
